# EUROPÄISCHE PATENTSCHRIFT

(11) **EP 1 496 291 B1**
(45) Veröffentlichungstag und Bekanntmachung des Hinweises auf die Patenterteilung: **31.01.2007**
(21) Anmeldenummer: 04016037.6
(22) Anmeldetag: 08.07.2004
(51) Int. Cl.: F16H 55/56

(54) **Stufenlos einstellbares Kegelscheibengetriebe mit Drehmomentfühler**
Continuously variable cone pulley transmission with torque sensor
Variateur continu à poulies coniques avec capteur de couple

(30) Priorität: 11.07.2003 DE 10331470
(43) Veröffentlichungstag der Anmeldung: 12.01.2005
(73) Patentinhaber: PIV Drives GmbH, 61352 Bad Homburg (DE)
(72) Erfinder: Schönnenbeck, Gert, Dr., 61267 Neu-Anspach (DE)
(74) Vertreter: Petersen, Frank

(56) Entgegenhaltungen:
- DE-A1- 4 036 398
- DE-A1- 19 544 644
- DE-A1- 19 921 750
- DE-A1- 19 939 435
- US-A- 4 439 170
- US-B1- 6 336 879

## Beschreibung

Die Erfindung betrifft ein stufenlos einstellbares Kegelscheibengetriebe mit je zwei auf der An- und Abtriebswelle angeordneten Kegelscheiben und einem zwischen diesen umlaufenden Übertragungsmittel, wobei auf jeder Welle eine Kegelscheibe durch einen mit der Welle umlaufenden Druckzylinder axial verschiebbar ist, während die beiden anderen Kegelscheiben axial fest abgestützt sind. Dabei ist wenigstens eine, der axial fest abgestützten Kegelscheiben zur lastabhängigen Erzeugung von Anpresskräften einem Fühler für das übertragene Drehmoment zugeordnet. Diesem wird Druckmittel mit der auf der eigenen oder der anderen Welle im dortigen Druckzylinder herrschenden Druck zugeführt. Dabei weist der Fühler außerdem wenigstens einen Wälzkörper auf, der zwischen zwei einander gegenüberliegenden Anpresskurven angeordnet ist, von denen eine der axial fest abgestützten Kegelscheibe zugeordnet ist. Die andere Anpresskurve ist einem axial verstellbaren Teil eines auf der Welle sitzenden Zylinder-Kolben-Aggregates zugeordnet.

Ein derartiges stufenlos einstellbares Kegelscheibengetriebe ist beispielsweise bekannt aus der DE-A-28 46 580.

Bei einer Vorrichtung dieser Art wird das Drehmoment reibschlüssig vom Antriebscheibensatz auf den Abtriebscheibensatz übertragen, wobei die Anpresskraft der Scheiben auf das dabei zwischen den Scheibensätzen umlaufende Übertragungsmittel in Form einer Kette durch Öldruck in den Druckzylindern aufgebaut wird. Dabei ist es bekannt, für einen guten Wirkungsgrad eines derartigen reibschlüssigen Getriebes und für einen möglichst geringen Verschleiß von Kette und Scheiben die Anpresskräfte der Scheiben in Abhängigkeit vom übertragenen Drehmoment zu regulieren, wozu der angesprochene Drehmomentfühler dient, der vorzugsweise direkt im Kraftfluss des Antriebscheibensatzes liegt.

Das Drehmoment wird dabei von einem axial verstellbaren Teil des Zylinder-Kolben-Aggregates des Drehmomentfühlers auf Wälzkörper übertragen, die üblicherweise durch mehrere Kugeln gebildet werden. Diese Kugeln leiten das Drehmoment dann auf eine Fühlerplatte weiter, die bekannterweise in die axial fest abgestützte Kegelscheibe zu integrieren ist. Die Wälzkörper sitzen dabei in Kugeltaschen, die an dem axial verstellbaren Teil und an der Fühlerplatte vorgesehen sind und die in Umfangsrichtung als geneigte Flächen ausgebildete, einander gegenüberliegende Anpresskurven aufweisen. Hierdurch baut sich eine dem Drehmoment proportionale Axialkraft auf, die das verstellbare Teil des Zylinder-Kölben-Aggregates des Drehmomentfühlers gegen das Öl innerhalb des Zylinder-Kolben-Aggregates drückt. Gleichzeitig wird durch die axiale Verstellung des verstellbaren Teils des Zylinder-Kolben-Aggregates ein Abflussspalt für das durch das Zylinder-Kolben-Aggregat durchfließende Öl verstellt. Das Öl wird dabei so stark gedrosselt, dass sich ein Gleichgewicht zwischen der hydraulischen Kraft aus dem Öldruck des Zylinder-Kolben-Aggregates und der durch die Wälzkörper erzeugten Axialkraft einstellt. Damit kann der Druck innerhalb des Systems einem sich ändernden Drehmoment innerhalb nur weniger Millisekunden folgen und damit insbesondere schneller als z.B. ein Regelkreis aus Drehmomentmesswelle, Regler und proportionalem Magnetventil.

Außerdem fungiert ein derartiger Drehmomentfühler auch als ein sehr schnell wirkender Speicher: Hierzu muss berücksichtigt werden, dass bei einer plötzlich auftretenden Drehmomentspitze die Drücke in den Scheibensätzen schnell ansteigen müssen, um ein schädliches Kettenrutschen zu vermeiden. Unter diesem Aspekt ist der Drehmomentfühler wie oben beschrieben in der Lage, gespeichertes Öl zum Ausgleich von Ölkompressibilität und Systemelastizität direkt in die den Scheibensätzen zugeordneten Druckzylinder zu fördern, wodurch er kurzfristig eine Pumpe mit einer hohen Förderleistung von beispielsweise mehr als 30 l/min ersetzen kann. Darüber hinaus wirkt der Drehmomentfühler als Drehschwingungsdämpfer.

Eine entsprechende Vorrichtung ist dabei beispielsweise auch bekannt aus der US-B1-6336879, die alle Merkmale des Oberbegriffes des unabhängigen Anspruchs 1 offenbart.

Aufgabe der vorliegenden Erfindung ist es jetzt, eine derart bekannte Vorrichtung dahingehend weiterzubilden, dass sie den auftretenden Drehmomentänderungen noch schneller und dynamischer folgen kann. Weiterhin soll die ohnehin vorhandene Reaktionskraft auf die Festscheibe dazu benutzt werden, wirkungsgradschädliches Verformen zu minimieren.

Diese Aufgabe wird erfindungsgemäß gelöst, mit einem Getriebe mit den Merkmalen gemäß dem Hauptanspruch.

Der Erfindung liegt dabei die Erkenntnis zugrunde, dass bei den bisher zum Einsatz gekommenen Konstruktionen die Eigenelastizität von einzelnen Bauelementen sowie relativ hohe träge Massen einer hohen Dynamik beim Nachregeln von Drehmomentänderungen abträglich sind. Dies wird durch die jetzt vorgeschlagene konstruktive Ausführungsform minimiert.

Insbesondere wird vorgeschlagen, die Anpresskurven für die Wälzkörper an der axial fest abgestützten Kegelscheibe auf einem an dieser umlaufenden Ring anzuordnen. Dadurch kann erreicht werden, dass die feststehende Kegelscheibe steifer wird. Dies senkt die Eigenelastizität dieses Bauteils. Außerdem ist so auch zu erreichen, dass selbst bei einer nur geringeren Anzahl von über den Umfang verteilten Wälzkörpern dies nicht zu einer unerwünschten, schädlichen Laufflächenwelligkeit der feststehenden Kegelscheibe führt. - Eine geringe Anzahl von Wälzkörpern verringert dabei zum einen die träge Masse, was der Dynamik der Nachregelung zugute kommt. Zum anderen sind aber auch weniger in der Herstellung teure Anpresskurven notwenig.

Vorzugsweise ist der an der axial fest abgestützten Kegelscheibe vorgesehene umlaufende Ring einstückig mit dieser Kegelscheibe ausgebildet. Hierdurch kann insbesondere eine noch kostengünstigere Fertigung erreicht werden

Insbesondere ist aber, bei der erfindungsgemäßen Vorrichtung beim Zylinder-Kolben-Aggregat des Drehmomentfühlers der Zylinder als verstellbares Teil vorgesehen, wobei der Wirkradius der Wälzkörper eine Größe hat, die zwischen dem Innen- und dem Außenradius des Zylinders liegt. Hierdurch wird erreicht, dass von den Wälzkörpern auf das Zylinder-Kolben-Aggregat wirkende Verstellkräfte im wesentlichen in Axialrichtung auf die Zylinderwände wirken. Diese haben in dieser Richtung eine hohe Steifigkeit, so dass eventuell auftretende Bauteilelastizitäten minimiert sind und sich nicht negativ auf das dynamische Verhalten des Drehmomentfühlers sowie auf die Verformung der Festscheibe auswirken können.

Weiter Vorteile und Merkmale der Erfindung ergeben sich aus der nachfolgenden Beschreibung eines Ausführungsbeispiels. Dabei zeigt:

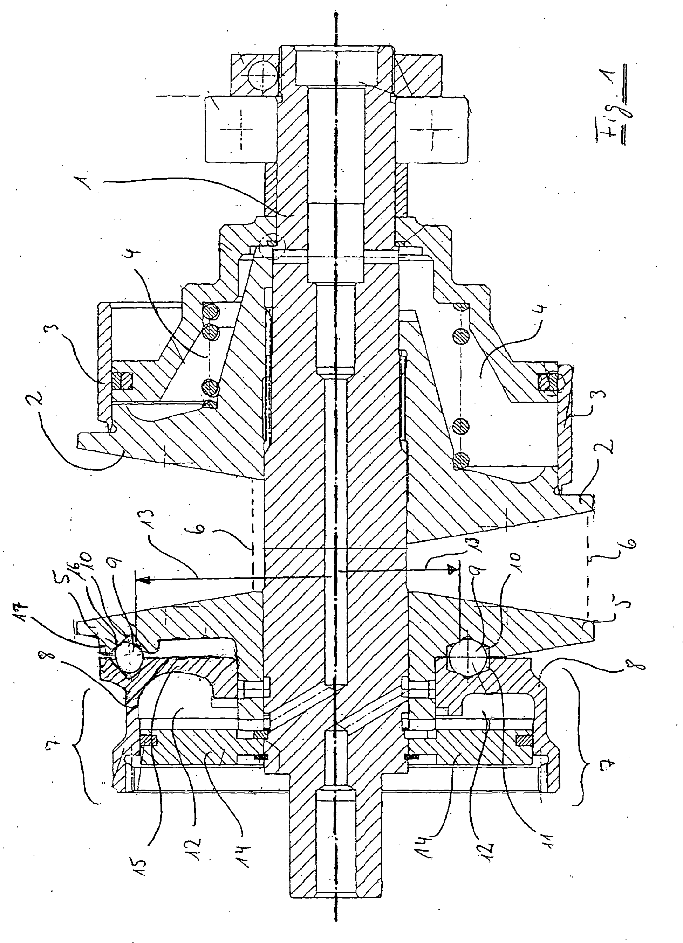

- Figur 1: den schematischen Aufbau eines Scheibensatzes eines hydraulisch verstellbaren Kegelscheibengetriebes mit einem Drehmomentfühler

Figur 1 zeigt die Prinzipdarstellung eines Scheibensatzes für ein Kegelscheibengetriebe. Unterhalb der Mittellinie ist der Stand der Technik dargestellt. Oberhalb der Mittellinie findet sich eine erfindungsgemäße Weiterbildung

Der Scheibensatz sitzt auf einer Welle 1, auf der zur Einstellung und Aufrechterhaltung der gewünschten Getriebeübersetzung eine axial verschiebbare Kegelscheibe 2 angeordnet ist, die mit einer mit ihr verbundenen umlaufenden Schürze 3 den Zylinder eines Zylinder-Kolben-Aggregates 4 bildet.

Der axial verstellbaren Kegelscheibe 2 gegenüber liegt eine fest abgestützte Kegelscheibe 5. Zwischen den jeweiligen Kegelscheibenpaaren läuft eine nicht näher dargestellte Kette 6 als umlaufendes Übertragungsmittel um.

Dem Zylinder-Kolben-Aggregat 4 wird von einer nicht dargestellte Druckmittelquelle Druckmittel zugeführt.

Außerdem sitzt auf der Welle 1 ein Drehmomentfühler 7, der den Druck im Zylinder-Kolben-Aggregat 4 bestimmt. Vom Drehmomentfühler abfließendes Drucköl kann drucklos auf das Übertragungsmittel 6 zu dessen Beölung und Kühlung abgegeben werden.

Grundsätzlich ist es bekannt, dass ein Getriebe, das auf eine bestimmte Übersetzung eingestellt ist, bei einem Drehmomentstoß auf die Antriebswelle abtriebseitig durchrutscht, was ausgesprochen schädigend wirkt. Um dem entgegenzuwirken, sitzt der Drehmomentfühler direkt im Kraftfluss vorzugsweise des Antriebscheibensatzes. Das übertragene Drehmoment wird vom beweglichen Zylinder 8.des als Zylinder-Kolben-Aggregat ausgestalteten Drehmomentfühlers 7 auf mehrere Wälzkörper 9 übertragen, die zwischen dem Zylinder 8 und der Kegelscheibe 5 angeordnet sind. Im hier dargestellten Beispiel handelt es sich bei den Wälzkörpern um Kugeln. Grundsätzlich sind aber auch rollen- oder tonnenförmige Wälzkörper vorstellbar.

Die Wälzkörper 9 laufen in Taschen 10, 11, die in die Kegelscheibe 5 bzw. in den Zylinder 8 des Drehmomentfühlers 7 eingearbeitet sind. Dabei weisen diese Taschen in Umfangsrichtung geneigte Flächen auf. Hierdurch baut sich eine dem Drehmoment proportionale Axialkraft auf, die über den Zylinder 8 gegen das Öl in der Kammer 12 des Drehmomentfühlers 7 drückt. Bei einem plötzlich auftretenden Drehmomentstoß wird durch Verschiebung des Zylinders 8 und damit des Zylinderbodens 15 der Ölabfluss aus der Kammer 12 verschlossen und gleichzeitig das in der Kammer 12 befindliche Öl zu einer entsprechenden Druckerhöhung mit hoher Geschwindigkeit in das Zylinder-Kolben-Aggregat 4 der axial verstellbaren Kegelscheibe gepumpt, um dort die entsprechende Druckerhöhung zu bewirken, die ein schädliches Durchrutschen der Kette vermeidet.

Während im Stand der Technik die Wälzkörper 9 auf einem Wirkradius 13 umlaufen, der kleiner ist als der Außenradius des Kolbens 14 des den Drehmomentfühler 7 bildenden Zylinder-Kolben-Aggregates, ist erfindungsgemäß dieser Wirkradius so groß zu wählen, dass er eine Größe zwischen dem Innen- und dem Außenradius des Zylinders 8 hat. Hierdurch ist zu erreichen, dass die von den Wälzkörpern 9 auf den Zylinder 8 ausgeübten Axialkräfte direkt und ohne Umlenkung in die Zylinderwand eingeleitet werden können und so keine Elastizitäten des Zylinderbodens 15 zu einer Dynamikverschlechterung bei der Fühlerregelung führen. Ansonsten kann dieser Zylinderboden 15 im Verhältnis zum bisherigen Stand der Technik auch dünner ausgeführt werden, wodurch auch eine Gewichtsersparnis erreicht werden kann, was über die Materialersparnis natürlich auch eine Kosteneinsparung ergibt. Außerdem werden wieder träge Massen reduziert.

Wie in der Figur 1 zu erkennen ist, sind die Taschen 10 mit ihren Anpresskurven 16 bei der erfindungsgemäßen Ausführungsform in einem an der Kegelscheibe 5 angeordneten Ring 17 vorgesehen. Dieser Ring wirkt versteifend auf diese Kegelscheibe 5, so dass diese auch dünner ausgebildet werden kann. Weiterhin gibt dieser Ring die Möglichkeit, weniger Wälzkörper über den Umfang verteilt vorzusehen, ohne dass eine derartige geringere Anzahl von Wälzkörpern und Taschen, in denen diese laufen, eine Laufflächenwelligkeit bei der Kegelscheibe 5 zur Folge hätte.

Die Erfindung bietet somit insgesamt die Möglichkeit, die Funktionalität eines stufenlosen Getriebes zu verbessern und gleichzeitig eine kostengünstigere Fertigung zu erreichen.

## Patentansprüche

1. Stufenlos einstellbares Kegelscheibengetriebe mit je zwei auf der An- und Abtriebswelle angeordneten Kegelscheiben (2, 5) und einem zwischen diesen umlaufenden Übertragungsmittel (6), wobei auf jeder Welle (1) eine Kegelscheibe (2) axial verschiebbar ist, während die beiden anderen Kegelscheiben (5) axial fest abgestützt sind,
wobei wenigstens eine der axial fest abgestützten Kegelscheiben (5) zur lastabhängigen Erzeugung von Anpresskräften einem Fühler (7) für das übertragene Drehmoment zugeordnet ist, wobei der Fühler wenigstens einen Wälzkörper (9) aufweist, der zwischen zwei einander gegenüberliegenden Anpresskurven (10, 11) angeordnet ist, von denen eine (10) der axial fest abgestützten Kegelscheibe zuzuordnen ist, und die andere (11) einem axial verstellbaren Teil (8) eines auf der Welle sitzenden Zylinder-Kolben-Aggregates des Fühlers (7),
und wobei
der Wälzkörper (9) auf einem Wirkradius (13) abrollt, der wenigstens so groß ist wie der Außenradius des Kolbens (14) des Zylinder-Kolben-Aggregates,
**dadurch gekennzeichnet,**
**dass** der Zylinder (8) der verstellbare Teil des Zylinder-Kolben-Aggregates ist und dass der Wirkradius (13) eine Größe zwischen dem Innen- und dem Außenradius dieses Zylinders (8) hat.

2. Kegelscheibengetriebe gemäß Anspruch 1,
**dadurch gekennzeichnet,**
**dass** die Anpresskurve (16) an der axial fest abgestützten Kegelscheibe (5) auf einem an dieser umlaufenden Ring (17) angeordnet ist.

3. Kegelscheibengetriebe gemäß Anspruch 2,
**dadurch gekennzeichnet,**
**dass** der Ring (17) einstückig mit der Kegelscheibe (5) ausgebildet ist.

## Claims

1. An infinitely adjustable cone pulley transmission with two cone pulleys (2, 5) disposed in each case on the drive shaft and the output shaft and with a transmission means (6) rotating between them, wherein one cone pulley (2) is axially movable on each shaft, whilst the two other cone pulleys (5) are supported so that they are axially stationary, wherein for the load-dependent generation of contact forces at least one of the axially stationary cone pulleys (5) is assigned to a sensor (7) for the transmitted torque, the sensor having at least one roller body (9) which is situated between two opposing contact curves (10, 11), of which one (10) is assigned to the cone pulley which is supported so as to be axially stationary and the other curve (11) is assigned to an axially adjustable part (8) of a cylinder/piston unit of the sensor (7) seated on the shaft, and wherein the roller body rolls on an effective radius (13) which is at least as great as the outer radius of the piston (14)of the cylinder/piston unit, **characterised in that** the cylinder (8) is the adjustable part of the cylinder/piston unit, and that the effective radius (13) has a size between the inner and the outer radius of this cylinder (8).

2. Cone pulley transmission as claimed in Claim 1, **characterised in that** the contact curve (16) is disposed on a ring (17) rotating on the cone pulley (5) which is supported so as to be axially stationary.

3. Cone pulley transmission as claimed in Claim 2, **characterised in that** the ring (17) is constructed in one piece with the cone pulley (5).

## Revendications

1. Variateur à poulies coniques réglable en continu, comprenant deux poulies étagées (2, 5) à la fois sur l'arbre menant et sur l'arbre mené et un moyen de transmission (6) tournant entre celles-ci, une poulie étagée (2) étant mobile axialement sur chaque arbre (1), tandis que les deux autres poulies étagées (5) sont montées fixement dans la direction axiale, sachant qu'afin de produire des forces d'application en fonction de la charge, au moins une des poulies étagées (5) montées fixement dans la direction axiale est associée à un capteur (7) destiné à relever le couple transmis, le capteur présentant au moins un corps de roulement (9) disposé entre deux courbes de contact (10, 11) se faisant face, dont l'une (10) est à associer à la poulie étagée montée fixement dans la direction axiale et l'autre (11), à une partie (8) réglable axialement d'une unité piston/cylindre du capteur (7) qui est montée sur l'arbre, et le corps de roulement (9) roulant sur un rayon d'action (13) qui est au moins égal au rayon extérieur du piston (14) de l'unité piston/cylindre, **caractérisé en ce que** le cylindre (8) constitue la partie réglable de l'unité piston/cylindre, et **en ce que** le rayon d'action (13) a une valeur comprise entre le rayon intérieur et le rayon extérieur de ce cylindre (8).

2. Variateur de vitesse selon la revendication 1, **caractérisé en ce que** la courbe d'application (16) de la poulie étagée (5) fixe dans la direction axiale est située sur une bague (17) entourant cette dernière.

3. Variateur de vitesse selon la revendication 2, **caractérisé en ce que** la bague (17) et la poulie étagée (5) sont réalisées d'un seul tenant.
